Europäisches Patentamt

European Patent Office

Office européen des brevets

(11) Veröffentlichungsnummer: **0 392 970**
**A2**

## (12) EUROPÄISCHE PATENTANMELDUNG

(21) Anmeldenummer: **90710010.1**

(22) Anmeldetag: **03.04.90**

(51) Int. Cl.⁵: **A61C 13/265**

(30) Priorität: **14.04.89 DE 3912363**

(43) Veröffentlichungstag der Anmeldung:
**17.10.90 Patentblatt 90/42**

(84) Benannte Vertragsstaaten:
**DK ES FR GB GR IT NL SE**

(71) Anmelder: **Nova-Pro Attachment GmbH**
**Reingsen 25**
**D-5840 Schwerte(DE)**

(72) Erfinder: **Brügmann, Dirk A.**
**Reingsen 34**
**D-5840 Schwerte(DE)**

(74) Vertreter: **Hassler, Werner, Dr.**
**Postfach 17 04 Asenberg 62**
**D-5880 Lüdenscheid(DE)**

(54) **Matrize und Druckknopfpatrize für ein Zahnprothesengeschiebe.**

(57) Eine Matrize mit einem Angendurchgang für eine Druckknopfpatrize, wobei der Augendurchgang einen nach innen vorspringenden Ringbund aufweist und ein Ringeinsatz aus Kunststoff mit mehreren in radialer Richtung nachgiebigen Segmentzungen mit je einer stufenförmigen Umfangsprofilrille vorgesehen ist. Das technische Proböem ist eine solche Ausbildung der Druckknopfpatrize, daß der Kopf der Druckknopfpatrize fest und stabil ausgebildet sein kann. Die Fußwand der Umfangsprofilrille (8) einen Ringspalt (11) gegenüber der Innenfläche des Ringbundes (4) freiläßt. Außerdem betrifft die Erfindung eine zu dieser Matrize passenden Druckknopfspatrize.

Fig.1

EP 0 392 970 A2

## Matrize und Druckknopfpatrize für ein Zahnprothesengeschiebe

Die Erfindung betrifft eine Matrize mit einem Augendurchgang für eine Druckknopfpatrize, wobei der Augendurchgang einen nach innen vorspringenden Ringbund aufweist und ein Ringeinsatz aus Kunststoff mit mehreren in radialer Richtung nachgiebigen Segmentzungen mit je einer stufenförmigen Umfangsprofilrille vorgesehen ist.

Die DE-A-3 722 327 beschreibt eine Matrize der eingangs genannten Art. Bei dieser Anordnung ist der Kopf der Druckknopfpatrize in mehrere Segmente geteilt, so daß dieser Kopf in radialer Richtung nachgiebig ist und ein rastendes Einsetzen in den im wesentlichen starren Ringeinsatz möglich ist. Dieser nachgiebige Kopf der Drucknopfpatrize ist jedoch gefährdet, weil die Segmente nur sehr geringen Querschnitt haben und die Gafhr eines Bruches besteht.

Aufgabe der Erfindung ist eine solche Ausbildung der Druckknopfpatrize, daß der Kopf der Druckknopfpatrize fest und stabil ausgebildet sein kann.

Diese Aufgabe wird nach der Erfindung dadurch gelöst, daß die Fußwand der Umfangsprofilrille einen Ringspalt gegenüber der Innenfläche des Ringbundes freiläßt.

Die Erfindung unterscheidet sich insofern vom Stand der Technik, als der Ringeinsatz im Einbauzustand beim Eindrücken der Druckknopfpatrize gedehnt werden kann. Es ist eine Verformung des Ringeinsatzes im Bereich des Ringspaltes möglich. Dadurch erhält man eine rastende Festhaltung der Druckknopfpatrize. Da die Druckknopfpatrize selbst nicht nachgiebig im Kopfbereich ist, können die Abmessungen der Druckknopfpatrize und der Matrize verkleinert werden. Dieses ist eine außerordentliche Verbesserung, da dadurch die Möglichkeiten des Einsatzes einer derartigen Patrize erweitert werden.

Der Ringeinsatz wird dadurch sicher festgehalten, daß die gegen die Zungenspitze gelegene Stufenwand der Umfangsprofilrille des Ringeinsatzes den Ringspalt überdeckt und an einer Stufenfläche des Ringbundes anliegt.

Das Nachgeben des Ringeinsatzes beim Eindrücken der Druckknopfpatrize wird dadurch sichergestellt, daß sich der Spalt in Richtung der Zungenspitze verbreitert.

Der nachgiebige Ringeinsatz ermöglicht die Verwendung einer Druckknopfpatrize, deren Kopfwandung über den gesamten Umfang geschlossen ist.

Damit die Druckknopfpatrize einstellbar und nachstellbar ist, ist vorgesehen, daß von der Stirnfläche ausgehend ein axiales Gewindeloch innerhalb der Druckknopfpatrize mit sich kegelförmig erweiterndem Stirnabschnitt vorgesehen ist und daß eine Spannschraube mit einem sich entsprechend kegelförmig erweiternden Kopf in das Gewindeloch einschraubbar ist. Diese Ausbildung der Druckknopfpatrize ermöglicht erweiterte Anpassungsmöglichkeiten von Zahnprothesen der genannten Art an die individuellen Verhältnisse und Wünsche des jeweiligen Trägers.

Ausführungsformen der Erfindung werden im Folgenden unter Bezugnahme auf die anliegenden Zeichnungen erläutert, in denen darstellen:

Fig. 1 einen Schnitt durch eine Matrize mit einer Druckknopf patrize vor dem Einsetzen der Druckknopfpatrize,

Fig. 2 eine entsprechende Darstellung beim Einsetzvorgang,

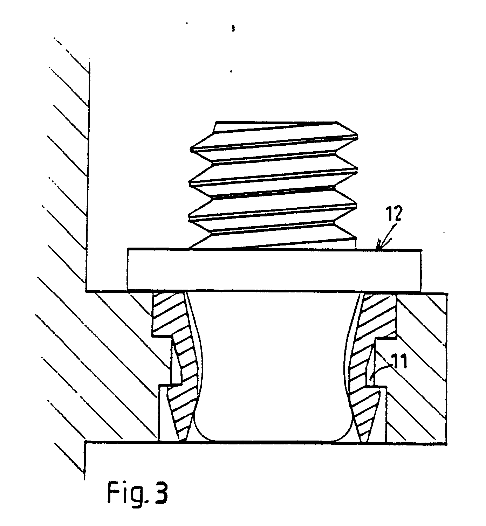

Fig. 3 eine Darstellung des zusammengefügten Zustandes,

Fig. 4 eine Draufsicht auf eine Druckknopfpatrize mit nachstellbarem Kopf,

Fig. 5 einen Schnitt zu Fig. 4,

Fig. 6 eine Darstellung des Aufweitvorganges des Kopfes der Druckknopfpatrize und

Fig. 7 eine Darstellung des aufgeweiteten Zustandes der Druckknopfpatrize.

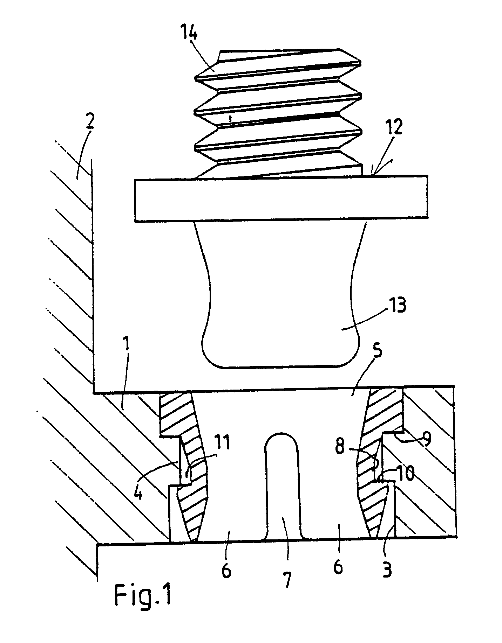

Fig. 1 zeigt einen Steg 1 an einem Restgebißaufbau 2. Der Steg 1 hat einen Augendurchgang 3 mit einem nach innen vorspringenden Ringbund 4, der stufenförmig ausgebildet ist. Diese Teile sind als Gußteile des Restgebißaufbaus 2 ausgebildet.

Ein Ringeinsatz 5 aus einem verschleißfesten und nachgiebigen Kunststoff weist zwei oder mehrere Segmentzungen 6 auf, die jeweils durch axiale Schlitze 7 getrennt sind, die sich von der Einführungs seite an der Zungenspitze aus erstrecken. Die Segmentzungen 6 und damit der Ringeinsatz haben eine äußere Umfangsprofilrille 8, deren Stufenwände 9 und 10 jeweils an den Ringwänden des Ringbundes 4 anliegen.

Fig. 1 zeigt den Einbauzustand des Ringeinsatzes 5. Dabei liegen die Stufenwände 9 und 10 an den Stufenflächen des Ringbundes 4 an. Zwischen der Innenfläche des Ringbundes 4 und der Innenfläche der Umfangsrinne 8 bleibt ein Ringspalt 11 frei. Dieser Ringspalt 11 hat einen sich gegen die Spitze der Segmentzungen 6 verbreiternden Querschnitt, so daß die Segmentzungen 6 in radialer Richtung nachgeben können. Dabei stützt sich die Stufenwand 10 immer an der entsprechenden Stufenwand des Ringbundes 4 ab.

Fig. 1 zeigt eine Druckknopfpatrize 12 mit einem hinterschnittenen Kopf 13 und einem Gewindeansatz 14. Die Druckknopfpatrize 12 ist in üblicher Weise in eine Mutter an einem Zahnprothesenteil eingebaut, was im einzelnen nicht dargestellt ist. Der Kopf 13 ist massiv ausgebildet. Er ist in radialer Richtung nicht nachgiebig.

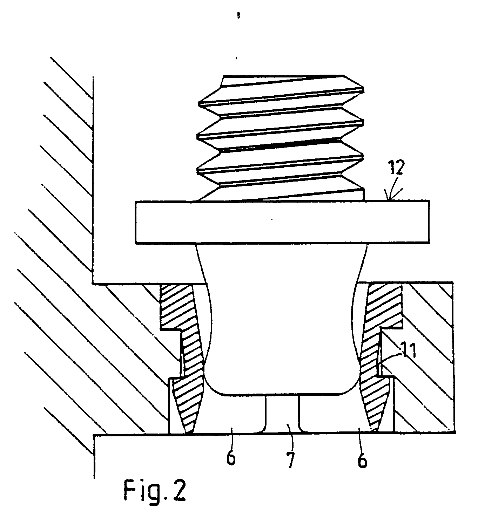

Beim Eindrücken des Druckknopfes in die Matrize gemäß Fig. 2 werden die Segmentzungen 6 in radialer Richtung nach außen gedrückt, wobei der Ringspalt 11 schmaler wird. Diese Bewegung ist durch die Ausbildung des Ringspaltes 11 gemäß Fig. 1 ohne weiteres möglich. Die Druckknopfpatrize rastet dann in üblicher Weise fest, wobei sich die Innenprofile der Segmentzungen an die Hinterschneidungsflächen des Kopfes anlegt und dadurch die Druckknopfpatrize festziehen. Der Ringspalt 11 stellt sich jetzt in entsprechenden Maße zurück, so daß eine formschlüssige Halterung der Druckknopfpatrize sichergestellt ist.

Die Druckknopfpatrize ist massiv ausgebildet und kann dadurch sehr klein gehalten werden. Entsprechend kann auch der Durchmesser des Ringeinsatzes und der Matrize klein gehalten werden.

Der massive Kopf 13 der Druckknopfpatrize 12 ermöglicht eine Einstellung des Kopfes an den Abnutzungszustand oder an individuelle Wünsche des Prothesenträgers.

Innerhalb des Kopfes 13 befindet sich ein axiales Gewindeloch 15, dessen Stirnabschnitt 16 sich kegelförmig erweitert. Eine Spannschraube 17 hat einen sich kegelförmig erweiternden Kopf 18, der im wesentlichen an die kegelförmige Erweiterung des Abschnittes 16 angepaßt ist.

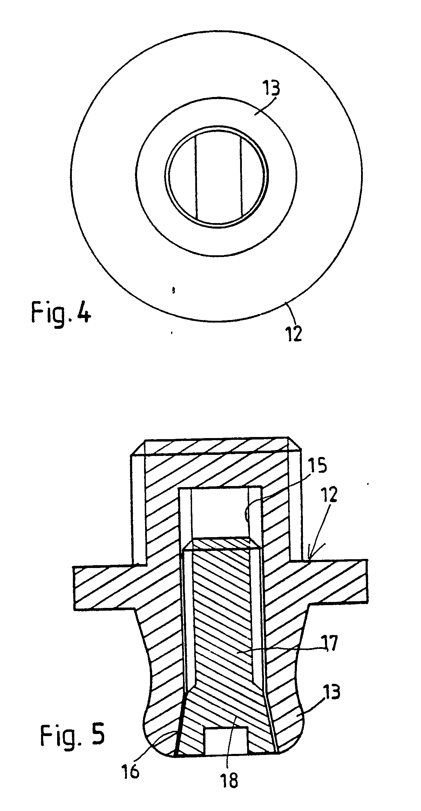

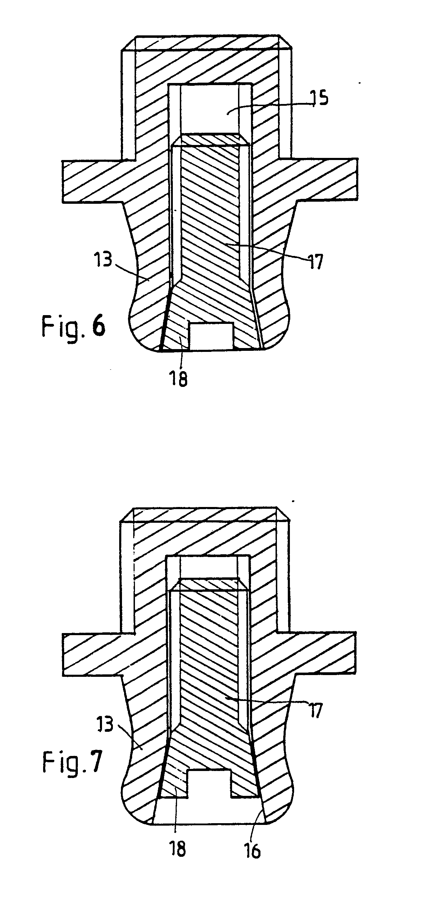

Die Figuren 5 und 6 zeigen die Spannschraube nach dem Einsetzen in das Gewindeloch 15, wobei der Kopf 13 noch unverformt ist. Beim Nachstellen des Kopfes wird die Spannschraube 17 gemäß Fig. 7 eingeschraubt. Dabei erfolgt durch das Zusammenwirken des kegelförmigen Kopfes 18 mit dem kegelförmigen Abschnitt 16 eine inelastische Dehnung des Kopfes 13, so daß dadurch der Kopf 13 vergrößert wird. Hierdurch läßt sich die Friktion des Kopfes 13 entsprechend dem Abnutzungszustand und/oder den individuellen Bedürfnissen und Wünschen des Prothesenträgers einstellen.

**Ansprüche**

1. Matrize mit einem Augendurchgang für eine Druckknopfpatrize, wobei der Augendurchgang einen nach innen vorspringenden Ringbund aufweist und ein Ringeinsatz aus Kunststoff mit mehreren in radialer Richtung nachgiebigen Segmentzungen mit je einer stufenförmigen Umfangsprofilrille vorgesehen ist, dadurch gekennzeichnet, daß die Fußwand der Umfangsprofilrille (8) einen Ringspalt (11) gegenüber der Innenfläche des Ringbundes (4) freiläßt.

2. Matrize nach Anspruch 1, dadurch gekennzeichnet, daß die gegen die Zungenspitze gelegene Stufenwand (10) der Umfangsprofilrille (8) des Ringeinsatzes (5) den Ringspalt (11) überdeckt und an einer Stufenfläche des Ringbundes (4) anliegt.

3. Matrize nach Anspruch 2, dadurch gekennzeichnet, daß sich der Ringspalt (11) in Richtung der Zungenspitzen verbreitert.

4. Druckknopfpatrize mit einem halsförmig profilierten Kopf, dadurch gekennzeichnet, daß die Kopfwandung über den gesamten Umfang geschlosssen ist.

5. Druckknopfpatrize nach Anspruch 4, dadurch gekennzeichnet, dao von der Stirnfläche ausgehend ein axiales Gewindeloch (15) innerhalb der Druckknopfpatrize (12) mit sich kegelförmig erweiterndem Stirnabschnitt (16) vorgesehen ist und daß eine Spannschraube (17) mit einem sich entsprechend kegelförmig erweiternden Kopf (18) in das Gewindeloch (15) einschraubbar ist.

Fig.1

Fig. 2

Fig. 3

Fig. 4

Fig. 5

Fig. 6

13

15

17

18

Fig. 7

13

17

18    16